# EUROPEAN PATENT SPECIFICATION

(11) **EP 3 277 774 B1**
(45) Date of publication and mention of the grant of the patent: **29.07.2020**
(21) Application number: 16774048.9
(22) Date of filing: 30.03.2016
(51) Int. Cl.: C09K 8/52, E21B 21/06

(54) **CASING FLUSH FLUID, RECYCLABLE CLEANOUT FLUIDS, AND APPLICATIONS THEREOF**
FLÜSSIGKEIT ZUR SPÜLUNG VON BOHRROHREN, WIEDERVERWERTBARE REINIGUNGSFLÜSSIGKEITEN UND ANWENDUNGEN DAVON
FLUIDE DE RINÇAGE DE TUBAGE, FLUIDES DE NETTOYAGE RECYCLABLES, ET APPLICATIONS ASSOCIÉES

(30) Priority: 30.03.2015 US 201562140105 P
(43) Date of publication of application: 07.02.2018
(73) Proprietor: Baker Hughes Holdings LLC, Houston, TX 77073 (US)
(72) Inventor: NELSON, Scott G., Houston, TX 77210-4740 (US); LI, Leiming, Houston, TX 77210-4740 (US); SUN, Hong, Houston, TX 77210-4740 (US); ZHOU, Jia, Houston, TX 77210-4740 (US)
(74) Representative: BRP Renaud & Partner mbB Rechtsanwälte Patentanwälte Steuerberater
(86) International application number: PCT/US2016/024861
(87) International publication number: WO 2016/160899

(56) References cited:
- US-A- 6 164 380
- US-A1- 2003 236 171
- US-A1- 2009 095 324
- US-A1- 2010 099 781
- US-B1- 6 419 019
- US-B2- 8 839 859

## Description

### BACKGROUND

The disclosure relates to the use of superabsorbent polymers in casing flush fluids and cleanout fluids.

Nowadays a sizeable percentage of wells are overflushed in order to remove as much proppant from the bottom of the horizontal casing as possible. Proppant such as sand remaining in the bottom of the casing causes issues with the deployment and setting of mechanical tools such as bridge plugs. Leftover proppant can cause a plug to prematurely set in the casing uphole from its intended target depth, or if placed at the proper location can cause the plug to fail to set in order to seal off the already treated portion of the horizontal lateral.

To combat this many operators have added the pumping of additional fluid that is above that required to flush the casing volume to the perforations. This additional fluid is intended to further flush the casing to remove unwanted proppant, but also carries with it added consequences. The additional fluid adds pumping time to the horsepower used on location, along with additional chemical costs that are associated with the extra treating fluid. It is also known that the overflush of frac stages in horizontal wells contributes to reductions in well productivity. The overflush of the wellbore can also displace proppant further into the fracture, thus harmfully removing proppant from the near wellbore region of the fracture.

US 2003/236171 A1 discloses a method for removing drill cuttings from a wellbore by using an aqueous fluid comprising a polymer viscosifier and a crosslinker. Suitable polymers are, in particular, polyacrylamides and polysaccharides.

Therefore, there is a need in the art for casing flush fluid having improved efficiencies. There is also a need for well cleanout fluids that are effective to suspend and carry small particles out of the well. It would be a further advantage if the cleanout fluids are recyclable.

### BRIEF DESCRIPTION

A method of removing residual proppant in a horizontal or deviated wellbore from the bottom surface of a casing or tubing string after a fracturing operation comprises: circulating a casing or tubing flush fluid comprising a carrier and a superabsorbent polymer in the wellbore; and transporting the residual proppant from the bottom surface of the casing or tubing to a fracture created by a hydraulic fracturing operation.

A method of cleaning a wellbore comprises: introducing a cleanout fluid through a conduit inserted into the wellbore, the cleanout fluid comprising a carrier fluid and a superabsorbent polymer present in an amount effective to suspend and carry debris in the wellbore to a surface of the wellbore; and receiving a returning fluid comprising debris at the surface of the wellbore from an annular space between the conduit and a wall of the wellbore.

### DETAILED DESCRIPTION

It has been found that superabsorbent polymers can be used in casing flush and wellbore cleanout applications. Such applications provide beneficial enhancements to both the ultimate production of a well, and operational improvements to time management efficiency on location. In particular, it has been found that adding superabsorbent polymers to the conventional casing flush fluid greatly improve the ability of the fluid to lift proppant up from the bottom surface of the casing and transport it into the fracture leaving a clean casing string with which to set a bridge plug.

In an embodiment, a casing flush fluid is provided which comprises a carrier and a superabsorbent polymer present in an amount effective to remove residual proppant from the bottom of the casing. The carrier includes fresh water or brine. The superabsorbent polymer can be used in an amount of about 9.08 to about 45.4 kg (about 20 to about 100 pounds) or about 13.62 to about 27.24 kg (about 30 to about 60 pounds) per 3785 L (one thousand gallons) of the casing flush fluid.

Optionally the casing flush fluid is a foam comprising a liquid phase and a gas constituent, wherein the liquid phase comprises a superabsorbent polymer and a carrier such as water or brine and the gas constituent comprises air, nitrogen, carbon dioxide, natural gas and the like, or mixtures thereof or a combination comprising at least one of the foregoing. Nitrogen is specifically mentioned. In an embodiment, the sum of the volumes of the gas constituent and the superabsorbent polymer is greater than about 50%, based on the total volume of the casing flush fluid. As used herein, the volume of the superabsorbent polymer refers to the volume of the superabsorbent polymer in an unhydrated form or in a hydrated form.

In order to uniformly disperse the gas into the liquid phase of the casing flush fluid, a small amount of a foaming agent can be used to reduce the surface tension and create a "wet" liquid phase. The foaming agent can be mixed into the liquid phase of the casing flush fluid in concentrations ranging from about 0.05 to about 5 volume% or about 0.1 to about 2 volume% based on the total volume of the liquid phase of the casing flush fluid.

The casing flush fluid can be used to remove residual proppant from the bottom surface of a casing after a fracturing operation. The method comprises circulating a casing flush fluid comprising a carrier and a superabsorbent polymer in the casing; and transporting the residual proppant from the bottom surface of the casing to a fracture created by a hydraulic fracturing operation. In an embodiment, the method further comprises breaking the superabsorbent polymer after the residual proppant is transported from the bottom surface of the casing to the fracture. The broken superabsorbent polymer can then be carried back to the surface of the wellbore through the carrier of the casing flush fluid and by the recovery of the fracturing fluid.

After the wellbore is flushed with the casing flush fluid, additional operations can be performed. In an embodiment a bridge plug is set after the wellbore is treated with the casing flush fluid. Any bridge plug known in the art can be used.

Unconventional reservoirs such as shale and tight permeability conventional reservoirs typically require multiple fractures along the horizontal or deviated azimuth wellbore to reach economic production levels and to provide effective drainage. When multiple fractures are required, the casing in a zone of interest, after being perforated and stimulated, must be hydraulically isolated before any new zone of interest can be exploited. Isolation of zones often consists of inserting a mechanical plug, such as a bridge plug, below the zone of interest. The bridge plug hydraulically isolates that portion of the well from a lower portion (or the rest) of the well. The isolation of the lower zone ensures that high pressure fracturing fluid pumped into the well is directed to the next zone of interest.

Treating a casing with a casing flush fluid as disclosed herein facilitates the setting of bridge plugs as the flush fluid is effective to remove particulates such as sand from the bottom surface of the casing thus avoiding any undesirable effects that the particulates may have on the proper setting of bridge plugs. The compositions and methods disclosed herein are particularly advantageous for treating horizontal casings where particulates settling out and accumulating can be a concern. Moreover, the improved efficiency allows for the use of less casing flush fluid to provide the desirable cleaning of the casing and avoids the issues associated with overflushing such as reductions in well productivity associated with the over displacement of proppant away from the near wellbore region.

The superabsorbent polymers can also be used in coiled tubing cleanout fluid due to its capability of suspending and carrying small particles such as proppant and cuttings. A cleanout fluid can comprise a base or carrier fluid and a superabsorbent polymer present in an amount effective to suspend and carry debris in a wellbore to a surface of the wellbore. The carrier can be fresh water or brine. The superabsorbent polymer is used in an amount of about 9.08 to about 45.4 kg (about 20 to about 100 pounds) or about 13.60 to about 27.24 kg (about 30 to about 60 pounds) per 3785 L (one thousand gallons) of the cleanout fluid.

Optionally the cleanout fluid comprises various fractions of gas and is selected to compensate for underpressured formations or where liquid cleanout fluid annular velocities are insufficient to lift solids. Such cleanout fluid can be a foam comprising a liquid phase and a gas constituent, wherein the liquid phase comprises a superabsorbent polymer and a carrier. Examples of the gas constituent are air, nitrogen, carbon dioxide, natural gas and the like, or mixtures thereof or a combination comprising at least one of the foregoing. In one embodiment, the gas constituent is nitrogen.

In order to uniformly disperse the gas into the liquid phase of the cleanout fluid, a small amount of a foaming agent is used to reduce the surface tension and create a "wet" liquid phase. The foaming agent can be mixed into the liquid phase in concentrations ranging from about 0.05 to about 5 volume% or about 0.1 to about 2 volume% based on the total volume of the liquid phase of the cleanout fluid. The "wet" liquid is then pumped down the treatment line and commingled with the gas constituent. The turbulent action created by the gas constituent intermixing with the "wet" liquid provides sufficient dispersion for the formation of a homogeneous, emulsified fluid (foam).

In an embodiment, the sum of the volumes of the gas constituent and the superabsorbent polymer is greater than about 50%, based on the total volume of the cleanout fluid. As used herein, the volume of the superabsorbent polymer refers to the volume of the superabsorbent polymer in an unhydrated form or in a hydrated form.

The cleanout fluid can be used to remove debris from a wellbore. A method for cleaning a wellbore comprises: introducing a cleanout fluid through a conduit inserted into the wellbore; and receiving a returning fluid comprising debris at the surface of the wellbore from an annular space between the conduit and a wall of the wellbore.

The conduit can be a drill string, a casing string, tubing string, coiled tubing or joined tubing. Coiled tubing is preferred. As used herein, coiled tubing refers to a very long metal pipe, which is normally supplied spooled on a large reel. Treatment fluids such as cleanout fluids can be pumped through the coil and pushed into the wellbore rather than relying on gravity. Coiled tubing is not particularly limited and can include any coiled tubing known to a person skilled in the art.

When the cleanout fluid is circulated back to the ground with the debris from the wellbore, it would be cost efficient to recycle the superabsorbent polymer.

The superabsorbent polymer in the fluid circulated back to the ground typically comprises hydrated particles. These hydrated superabsorbent particles can be smaller or lighter or both than the debris carried out of the wellbore. Accordingly after water is added to the returning fluid, the fluid thins out and suspended debris precipitates. Hydrated particles of the superabsorbent polymer, on the other hand, remain dispersed throughout the returning fluid. The precipitated debris can then be removed by decantation or filtration to provide a slurry containing particles of the superabsorbent polymer. The slurry is filtered through a mesh filter having a mesh size smaller than a predetermined average size of the hydrated particles of the superabsorbent polymer. For example, if the hydrated superabsorbent polymer particles have a size around 2 mm, the mesh size used can be 0.5 mm to 1 mm. The superabsorbent polymer particles on the mesh filter can be rinsed during filtering to further clean the particles. The filtered hydrated superabsorbent polymer particles can be reused alone or together with fresh unhydrated superabsorbent polymers for further operations.

The components for the casing flush fluid and the cleanout fluid are described in more detail below.

The carrier for the casing flush fluid and the cleanout fluid can be fresh water or brine. The brine can be, for example, seawater, produced water, completion brine, or a combination comprising at least one of the foregoing. The properties of the brine can depend on the identity and components of the brine. Seawater, for example, can contain numerous constituents including sulfate, bromine, and trace metals, beyond typical halide-containing salts. Produced water can be water extracted from a production reservoir (e.g., hydrocarbon reservoir) or produced from the ground. Produced water can also be referred to as reservoir brine and contain components including barium, strontium, and heavy metals. In addition to naturally occurring brines (e.g., seawater and produced water), completion brine can be synthesized from fresh water by addition of various salts for example, KCI, NaCI, ZnCl₂, MgCl₂, or CaCl₂ to increase the density of the brine, such as about 0.454 to about 0.2724 kg (about 1 to about 0.6 pounds) per 3.785 L (one gallon) of CaCl₂ brine. Completion brines typically provide a hydrostatic pressure optimized to counter the reservoir pressures downhole. The above brines can be modified to include one or more additional salts. The additional salts included in the brine can be NaCI, KCl, NaBr, MgCl₂, CaCl₂, CaBr₂, ZnBr₂, NH₄Cl, sodium formate, cesium formate, and combinations comprising at least one of the foregoing. The salt can be present in the brine in an amount of about 0.001 to about 50 weight percent (wt.%), specifically about 0.001 to about 40 wt.%, and more specifically about 0.001 to about 25 wt%, based on the weight of the fluid.

As used herein, a superabsorbent polymer (SAP) is a crosslinked polymer that is capable of absorbing large amounts of aqueous liquids, such as water and brine, with swelling and the formation of a gel or viscous material, and that retains the absorbed fluid under a certain pressure or temperature. The superabsorbent polymer can have internal crosslinks, surface crosslinks, or a combination comprising at least one of the foregoing.

The SAP comprises a hydrophilic network that retains large amounts of aqueous liquid relative to the weight of the SAP (e.g., in a dry state, the SAP absorbs and retains a weight amount of water equal to or greater than its own weight). The SAPs can be a variety of synthetic organic polymers that react with or absorb water and swell when contacted with an aqueous fluid. Non-limiting examples of such SAPs are poly(hydroxyC₁₋₈ alkyl (meth)acrylate)s such as (2-hydroxyethyl acrylate), poly(meth)acrylamide, poly(vinyl pyrrolidine), poly(vinyl acetate), starch-acrylonitrile grafted copolymer of polyacrylonitrile, carboxymethyl cellulose, crosslinked polyacrylates, sulfonated polystyrene, hydrolyzed polyacrylamide, polyvinyl alcohol, polyethylene oxide, polyvinyl pyrrolidone, polyacrylonitrile, and the like. The foregoing are inclusive of copolymers, for example copolymers of (meth)acrylamide with maleic anhydride, vinyl acetate, ethylene oxide, ethylene glycol, or acrylonitrile, or a combination comprising at least one of the foregoing. A combination of different polymers can be used.

The SAPs are polymerized from nonionic, anionic, cationic monomers, or a combination comprising at least one of the foregoing. Polymerization can be via free-radical polymerization, solution polymerization, gel polymerization, emulsion polymerization, dispersion polymerization, or suspension polymerization. Moreover, polymerization can be performed in an aqueous phase, in inverse emulsion, or in inverse suspension.

Examples of nonionic monomers for preparing the preformed synthetic polymers include (meth)acrylamide, alkyl-substituted (meth)acrylamides, aminoalkyl-substituted (meth)acrylamides, alkyliminoalkyl-substituted (meth)acrylamides, vinyl alcohol, vinyl acetate, allyl alcohol, C₁₋₈ alkyl (meth)acrylates, hydroxyC₁₋₈ alkyl (meth)acrylates such as hydroxyethyl (meth)acrylate, N-vinylformamide, N-vinylacetamide, and (meth)acrylonitrile. As used herein, "poly((meth)acrylamide)s" includes polymer comprising units derived from (meth)acrylamide, alkyl-substituted (meth)acrylamides such as N-C₁₋₈ alkyl (meth)acrylamides and N,N-di(C₁₋₈ alkyl) (meth)acrylamides, aminoalkyl-substituted (meth)acrylamides such as N,N-di(amino(C₁₋₈ alkyl))-substituted (meth)acrylamides, and (N,N-dialkylamino)alkyl-substituted (meth)acrylamides such as (N,N-di(C₁₋₈ alkyl)amino)(C₁₋₈ alkyl) (meth)acrylamides. Specific examples of the foregoing monomers include methacrylamide, N-methyl acrylamide, N-methyl methacrylamide, N,N-dimethyl acrylamide, N-ethyl acrylamide, N,N-diethyl acrylamide, N-cyclohexyl acrylamide, N-benzyl acrylamide, N,N-dimethylaminopropyl acrylamide, N,N-dimethylaminoethyl acrylamide, N-tert-butyl acrylamide, or a combination comprising at least one of the foregoing. In an embodiment, the poly((meth)acrylamide) is a copolymer of methacrylamide with maleic anhydride, vinyl acetate, ethylene oxide, ethylene glycol, or acrylonitrile, or a combination comprising at least one of the foregoing.

Examples of anionic monomers include ethylenically unsaturated anionic monomers having acidic groups, for example, a carboxylic group, a sulfonic group, a phosphonic group, a salt thereof, the corresponding anhydride or acyl halide, or a combination comprising at least one of the foregoing acidic groups. For example, the anionic monomer can be (meth)acrylic acid, ethacrylic acid, maleic acid, maleic anhydride, fumaric acid, itaconic acid, α-chloroacrylic acid, β-cyanoacrylic acid, β -methylacrylic acid, α-phenylacrylic acid, β-acryloyloxypropionic acid, sorbic acid, α-chlorosorbic acid, 2'-methylisocrotonic acid, cinnamic acid, p-chlorocinnamic acid, β-stearyl acid, citraconic acid, mesaconic acid, glutaconic acid, aconitic acid, 2-acrylamido-2-methylpropanesulfonic acid, allyl sulfonic acid, vinyl sulfonic acid, allyl phosphonic acid, vinyl phosphonic acid, a salt thereof, or a combination comprising at least one of the foregoing.

Examples of cationic monomers include (N,N-di(C₁₋₈ alkylamino)(C₁₋₈ alkyl) (meth)acrylates (e.g., N,N-dimethylaminoethyl acrylate and N,N-dimethylaminoethyl methacrylate), (wherein the amino group is quaternized to, e.g., a methyl chloride quaternary form), diallyldimethyl ammonium chloride, or any of the foregoing alkyl-substituted (meth)acrylamides and dialkylaminoalkyl-substituted (meth)acrylamides, such as (N,N-di(C₁₋₈ alkyl)amino)C₁₋₈ alkyl acrylamide, and the quaternary forms thereof such as acrylamidopropyl trimethyl ammonium chloride.

The superabsorbent polymer can contain both cationic substituents and anionic substituents. The cationic substituents and anionic substituents occur in various stoichiometric proportions, for example, a ratio of about 1:1, or one monomer can be present in a greater stoichiometric amount than the other monomer. Representative amphoteric polymers include terpolymers of nonionic monomers, anionic monomers and cationic monomers.

In an embodiment, the SAP includes a repeating unit derived from an acrylate, an acrylic acid or a salt thereof, an acrylamide, a vinylpyrrolidone, a vinyl ester (e.g., a vinyl acetate), a vinyl alcohol, a 2-acrylamide-2-methylpropanesulfonic acid, a derivative thereof, or a combination thereof.

The superabsorbent polymer can include a plurality of crosslinks among the polymer chains of the superabsorbent polymer. The crosslinks can be covalent and result from crosslinking the polymer chains using a crosslinker. The crosslinks are formed before the SAP is combined with the aqueous carrier. The crosslinker can be an ethylenically-unsaturated monomer that contains, for example, two sites of ethylenic unsaturation (i.e., two ethylenically unsaturated double bonds), an ethylenically unsaturated double bond and a functional group that is reactive toward a functional group (e.g., an amide group) of the polymer chains of the superabsorbent polymer, or several functional groups that are reactive toward functional groups of the polymer chains of the superabsorbent polymer. The degree of crosslinking can be selected so as to control the amount of swelling of the superabsorbent polymer. For example, the degree of crosslinking can be used to control the amount of fluid absorption or the volume expansion of the superabsorbent polymer. Accordingly, when the polymer particles comprise a superabsorbent polymer, the degree of crosslinking can be used to control the amount of fluid absorption or the volume expansion of the polymer particles.

Exemplary crosslinkers include a di(meth)acrylamide of a diamine such as a diacrylamide of piperazine, a C₁₋₈ alkylene bisacrylamide such as methylene bisacrylamide and ethylene bisacrylamide, an N-methylol compounds of an unsaturated amide such as N-methylol methacrylamide or N-methylol acrylamide, a (meth)acrylate esters of a di-, tri-, or tetrahydroxy compound such as ethylene glycol diacrylate, poly(ethyleneglycol) di(meth)acrylate, trimethylopropane tri(meth)acrylate, ethoxylated trimethylol tri(meth)acrylate, glycerol tri(meth)acrylate), ethoxylated glycerol tri(meth)acrylate, pentaerythritol tetra(meth)acrylate, ethoxylated pentaerythritol tetra(meth)acrylate, butanediol di(meth)acrylate), a divinyl or diallyl compound such as allyl (meth)acrylate, alkoxylated allyl(meth)acrylate, diallylamide of 2,2'-azobis(isobutyric acid), triallyl cyanurate, triallyl isocyanurate, maleic acid diallyl ester, polyallyl esters, tetraallyloxyethane, triallylamine, and tetraallylethylene diamine, a diols polyol, hydroxyallyl or acrylate compounds, and allyl esters of phosphoric acid or phosphorous acid. Specifically mentioned are water soluble diacrylates such as poly(ethylene glycol) diacrylate (e.g., PEG 200 diacrylate or PEG 400 diacrylate). A combination comprising any of the above-described crosslinkers can also be used. Additional crosslinks are described in US 2014/0332213, US 2014/0332214, and US 2015/0096751.

When the SAP is in the form of a particle, the particle can includes surface crosslink external to the interior of the particle. The surface crosslinks can result from addition of a surface crosslinker to the superabsorbent polymer particle and subsequent heat treatment. The surface crosslinks can increase the crosslink density of the particle near its surface with respect to the crosslink density of the interior of the particle. Surface crosslinkers can also provide the particle with a chemical property that the superabsorbent polymer did not have before surface crosslinking, and can control the chemical properties of the particle, for example, hydrophobicity, hydrophilicity, and adhesiveness of the superabsorbent polymer to other materials, for example, minerals (e.g., silicates) or other chemicals, for example, petroleum compounds (e.g., hydrocarbons, asphaltene, and the like).

Surface crosslinkers have at least two functional groups that are reactive with a group of the polymer chains, for example, any of the above crosslinkers, or crosslinkers having reactive functional groups such as an acid (including carboxylic, sulfonic, and phosphoric acids and the corresponding anions), an amide, an alcohol, an amine, or an aldehyde. Exemplary surface crosslinkers include polyols, polyamines, polyaminoalcohols, and alkylene carbonates, such as ethylene glycol, diethylene glycol, triethylene glycol, polyethylene glycol, glycerol, polyglycerol, propylene glycol, diethanolamine, triethanolamine, polypropylene glycol, block copolymers of ethylene oxide and propylene oxide, sorbitan fatty acid esters, ethoxylated sorbitan fatty acid esters, trimethylolpropane, ethoxylated trimethylolpropane, pentaerythritol, ethoxylated pentaerythritol, polyvinyl alcohol, sorbitol, ethylene carbonate, propylene carbonate, and combinations comprising at least one of the foregoing.

Additional surface crosslinkers include borate, titanate, zirconate, aluminate, chromate, or a combination comprising at least one of the foregoing. Boron crosslinkers include boric acid, sodium tetraborate, encapsulated borates, and the like. Borate crosslinkers can be used with buffers and pH control agents including sodium hydroxide, magnesium oxide, sodium sesquicarbonate, and sodium carbonate, amines (such as hydroxyalkyl amines, anilines, pyridines, pyrimidines, quinolines, pyrrolidines, and carboxylates such as acetates and oxalates), delay agents including sorbitol, aldehydes, sodium gluconate, and the like. Zirconium crosslinkers, e.g., zirconium lactates (e.g., sodium zirconium lactate), triethanolamines, 2,2'-iminodiethanol, or a combination comprising at least one of the foregoing can be used. Titanates crosslinkers can include, for example, lactates, triethanolamines, and the like.

Preferably the crosslinks are formed before the SAP is combined with the aqueous carrier. Accordingly the casing flush fluid and the cleanout fluid can be free of crosslinking agents. In an embodiment, the superabsorbent polymer does not have any surface crosslinks.

Non-limiting examples of SAPs include poly 2-hydroxyethyl acrylate, polyalkyl acrylate, polyacrylamide, poly methacrylamide, poly vinylpyrrolidone, poly vinyl acetate, polyacrylic acid, polyacrylic acid salt, or copolymers thereof. As a specific example, the SAP is polyacrylamide having crosslinks that are polyethylene glycol diacrylate. As another specific example, the SAP is a copolymer of acrylamide with, for example, maleic anhydride, vinyl acetate, ethylene oxide, ethylene glycol, acrylonitrile, or a combination thereof. Another specific example of SAP is polyacrylamide having crosslinks that are polyethylene glycol diacrylate. In some embodiments, the SAP is polyacrylic acid homopolymer or copolymer, wherein the crosslinks are vinyl ester oligomer. In an embodiment, the superabsorbent polymer is a copolymer of acrylic acid and sodium acrylate having crosslinks derived from polyethylene glycol diacrylate.

The SAP can be in a number of formats, including a particle (e.g., a powder), fiber, strand, braid, and the like, or a combination thereof. The size of the SAP is from 10 µm to 200,000 µm, specifically 50 µm to 10,000 µm, and more specifically 50 µm to 1,000 µm. As used herein, "size" refers to the largest linear dimension, e.g., a diameter in a spherical particle. Particles of the SAP are any shape including spherical, angular, and polyhedral. As used herein, "size" refers to the largest linear dimension, e.g., a diameter in a spherical particle. Particles of the SAP are any shape including spherical, angular, and polyhedral.

In some embodiments, the casing flush fluid and the cleanout fluid can further comprise a polysaccharide. Exemplary polysaccharides include starch, cellulose, xanthan gum, agar, pectin, alginic acid, tragacanth gum, pluran, gellan gum, tamarind seed gum, cardlan gum, guar gum, arabic, glucomannan, chitin, chitosan, hyaluronic acid, and combinations comprising at least one of the foregoing. The amount of the polysaccharide in the flush fluid or the cleanout fluid is between from about 0.454 kg (about 1 pound) of the polysaccharide per 3785 L (thousand gallons) of the casing flush or the cleanout fluid (ppt) to about 30 ppt, specifically from about 2 ppt to about 25 ppt or from about 4 ppt to about 20 ppt. In other embodiments, the flush fluid and the cleanout fluid are free of polysaccharides.

The foaming agent in the cleanout fluid is at least one surfactant. Examples of the foaming agent are non-ionic surfactants, cationic surfactants, anionic surfactants, amphoteric/zwitterionic surfactants, and mixtures thereof. Examples of non-ionic surfactants include, but are not limited to, alkoxylated alcohols or ethers, alkyl ethoxylates, alkylamido ethoxylates, alkylamine ethoxylate, alkyl glucosides, alkoxylated carboxylic acids, sorbitan derivatives where the alkyl chain length varies from 8 to 24, for example, nonylphenol ethoxylate, alkyl ethoxylates, oleyl carboxylic diethylamides, and the like and mixtures thereof. Examples of cationic surfactants include, but are not limited to, monoalkyl quaternary amines such as cocotrimonium chloride, cetyltrimonium chloride, stearyltrimonium chloride, soyatrimonium chloride, and behentrimonium chloride, dialkyl quaternary amines such as dicetyldimethyl ammonium chloride, dicocodimethyl ammonium chloride and distearyldimethyl ammonium chloride, and the like and mixtures thereof. Examples of anionic surfactants include, but are not limited to, fatty carboxylates, alkyl sarcosinates, alkyl phosphates, alkyl sulfonate, alkyl sulfates and the like and mixtures thereof. Examples of amphoteric/zwitterionic surfactants include, but are not limited to alkyl betaines, alkylamido propyl betaines, alkylampho acetates, alkylamphopropionates, alkylamidopropyl hydroxysultaines and the like and mixtures thereof. In an exemplary embodiment, the foaming agent is an olefinic sulfate, olefinic sulfonate, ethoxylated sulfate, cocoamidopropyl dimethyl ammmonium acetate (betaine), coco betaine, butoxyethanol and the like, or a combination comprising at least one of the foregoing. In another embodiment, the foaming agent comprises a blend of surfactants, or at least one surfactant and at least one co-surfactant. Examples of the co-surfactant are organic solvents such as ethylene glycol monobutyl ether, isopropyl alcohol, methanol, glycerol, ethylene glycol, mineral oil, and the like, or a combination comprising at least one of the foregoing.

The casing flush composition can further include a breaker in some embodiments. The breaker contacts the SAP to break the SAP after the particulates at the bottom of the casing are removed. In an embodiment, the breaker contacts the SAP and breaks a bond in the backbone of the polymer chains of the SAP, a bond in the crosslinker, a bond between the crosslinker and a polymer chain of the SAP, or a combination thereof. That is, breaking the SAP includes disintegrating, decomposing, or dissociating the SAP such as by breaking bonds in the backbone of the SAP, breaking crosslinks among chains of the SAP, changing a geometrical conformation of the superabsorbent polymer, or a combination thereof. In this way, the viscosity of the casing flush composition decreases. In some embodiments, the breaker breaks the SAP to form a decomposed polymer such as a plurality of fragments that have a lower molecular weight than the SAP.

The breaker includes an oxidizer such as a peroxide, a persulfate, a perphosphate, a perborate, a percarbonate, a persilicate, an oxyacid of a halogen, an oxyanion of halogen, a peracid, a derivative thereof, or a combination thereof.

The breaker is optionally encapsulated in an encapsulating material to prevent the breaker from contacting the SAP. The encapsulating material is configured to release the breaker in response to the breaking condition. The breaker is a solid or liquid. As a solid, the breaker is, e.g., a crystalline or granular material. In an embodiment, the solid is encapsulated or provided with a coating to delay its release or contact with the SAP. Encapsulating materials are known in the art and are not particularly limited. In an embodiment, a liquid breaker is dissolved in an aqueous solution or another suitable solvent.

The breaker can be present in the casing flush composition in a mass concentration from 0.1 ppt to 20 ppt, specifically 0.2 ppt to 15 ppt, and more specifically, 0.25 ppt to 10 ppt, based on the total volume of the fluid.

Other additives can be used in the flush and cleanout fluids. However, it is appreciated that the flush and cleanout fluids can be free of proppants, which are typically used in fracturing applications.

All ranges disclosed herein are inclusive of the endpoints, and the endpoints are independently combinable with each other. "Or" means "and/or." As used herein, "combination" is inclusive of blends, mixtures, alloys, reaction products, and the like. All references are incorporated herein by reference.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

While typical embodiments have been set forth for the purpose of illustration, the foregoing descriptions should not be deemed to be a limitation on the scope herein. Accordingly, various modifications, adaptations, and alternatives can occur to one skilled in the art without departing from the scope herein.

## Claims

1. A method of removing residual proppant in a horizontal or deviated wellbore from a bottom surface of a casing or tubing string after a fracturing operation, the method **characterized by**:
circulating a casing flush fluid comprising a carrier and a superabsorbent polymer comprising a plurality of crosslinks formed prior to combining the superabsorbent polymer with the carrier in the casing or tubing; and
transporting the residual proppant from the bottom surface of the casing or tubing to a fracture created by a hydraulic fracturing operation.

2. The method of claim 1, further **characterized by** setting up a bridge plug after the casing is treated with the casing flush fluid.

3. A method for cleaning out a wellbore, the method **characterized by**:
introducing a cleanout fluid through a conduit inserted into the wellbore to suspend and carry debris in the wellbore to a surface of the wellbore, wherein the cleanout fluid comprises a carrier fluid and a superabsorbent polymer comprising a plurality of crosslinks formed prior to combining the superabsorbent polymer with the carrier, wherein the cleanout fluid comprises 9.08 to 45.4 kg (20 to 100 pounds) of the superabsorbent polymer per 3785 L (one thousand gallons) of the cleanout fluid; and
receiving a returning fluid comprising debris at the surface of the wellbore from an annular space between the conduit and a wall of the wellbore.

4. The method of claim 3, wherein the conduit comprises a drilling string, casing string, tubing string, joined tubing, or coiled tubing.

5. The method of claim 3, further **characterized by**:
adding water to the returning fluid to provide a thinned out composition comprising a slurry of hydrated particles of the superabsorbent polymer and debris settled out of the thinned out composition;
separating the debris from the slurry; and
filtering the slurry through a mesh filter to provide recycled hydrated particles of the superabsorbent polymer, wherein the mesh filter has a mesh size smaller than a predetermined average size of the hydrated particles of the superabsorbent polymer.

6. The method of claim 5, further **characterized by**
combining the recycled hydrated particles of the superabsorbent polymer with a carrier and optionally with an unhydrated superabsorbent polymer to provide a treatment fluid, and
introducing the treatment fluid into a subterranean formation.

7. The method of any one of claims 1 to 6, wherein the cleanout fluid or the casing flush fluid is a foamed fluid comprising a foaming agent and a gas constituent.

8. The method of claim 7, wherein the sum of the volumes of the gas constituent and the superabsorbent polymer is greater than 50% based on the total volume of the foamed fluid.

9. The method of any one of claims 1 to 6, wherein
the carrier comprises water or brine; and
the superabsorbent polymer comprises repeating units derived from an acrylic acid or a salt thereof, an acrylate, an acrylamide, a vinylpyrrolidone, a vinyl acetate, a vinyl alcohol, a 2-acrylamide-2-methylpropanesulfonic acid, a derivative thereof, or a combination thereof.

10. The method of any one of claims 1 to 2, wherein the casing flush fluid comprises 9.08 to 45.4 kg (20 to 100 pounds) of the superabsorbent polymer per 3785 L (one thousand gal-Ions) of the casing flush fluid.

11. The method of any one of claims 1 to 6, wherein the cleanout fluid or the casing flush fluid further comprises 0.9 to 11.3 kg (2 to 25 pounds) of a polysaccharide per 3785 L (one thousand gallons) of the cleanout fluid or the casing flush fluid.

## Patentansprüche

1. Verfahren zum Entfernen von Stützmittelresten in einem horizontalen oder abgewichenen Bohrloch von einer unteren Oberfläche eines Futterrohr- oder Rohrstrangs nach einem Frakturierungsvorgang, wobei das Verfahren **gekennzeichnet ist durch:**
Zirkulierenlassen eines Futterrohrspülfluids, das einen Träger und ein superabsorbierendes Polymer umfasst, das eine Vielzahl von Vernetzungen umfasst, die vor dem Kombinieren des superabsorbierenden Polymers mit dem Träger in dem Futterrohr oder dem Rohr gebildet wurden; und
Transportieren von Stützmittelresten von der Bodenfläche des Futterrohrs oder Rohrs zu einer Fraktur, die **durch** einen hydraulischen Frakturierungsvorgang erzeugt wurde.

2. Verfahren nach Anspruch 1, **ferner gekennzeichnet durch** Einrichten eines Brückenstopfens nach dem Behandeln des Futterrohrs mit dem Futterrohrspülfluid.

3. Verfahren zum Reinigen eines Bohrlochs, wobei das Verfahren **gekennzeichnet ist durch:**
Einbringen eines Reinigungsfluid **durch** eine Leitung, die in das Bohrloch eingeführt ist, um Bohrklein in dem Bohrloch zu suspendieren und an eine Oberfläche des Bohrlochs zu tragen, wobei das Reinigungsfluid ein Trägerfluid und ein superabsorbierendes Polymer umfasst, das eine Vielzahl von Vernetzungen umfasst, die vor dem Kombinieren des superabsorbierenden Polymers mit dem Träger gebildet wurden, wobei das Reinigungsfluid 9,08 bis 45,4 kg (20 bis 100 Pfund) des superabsorbierenden Polymers pro 3785 I (eintausend Gallonen) des Reinigungsfluids umfasst; und
Aufnehmen eines zurückkehrenden Fluids, das Bohrklein umfasst, an der Oberfläche des Bohrlochs von einem Ringraum zwischen der Leitung und einer Wand des Bohrlochs.

4. Verfahren nach Anspruch 3, wobei die Leitung einen Bohrstrang, einen Futterrohrstrang, einen Rohrstrang, ein zusammengefügtes Rohr oder ein Wickelrohr umfasst.

5. Verfahren nach Anspruch 3, ferner **gekennzeichnet durch:**
Hinzufügen von Wasser zu dem zurückkehrenden Fluid, um eine ausgedünnte Zusammensetzung bereitzustellen, die eine Aufschlämmung von hydratisierten Teilchen des superabsorbierenden Polymers und Bohrklein umfasst, das sich aus der ausgedünnten Zusammensetzung absetzt;
Trennen des Bohrkleins von der Aufschlämmung und
Filtrieren der Aufschlämmung durch ein Maschenfilter, um zurückgeführte hydratisierte Teilchen des superabsorbierenden Polymers bereitzustellen, wobei das Maschenfilter eine Maschengröße aufweist, die kleiner als eine vorbestimmte durchschnittliche Größe der hydratisierten Teilchen des superabsorbierenden Polymers ist.

6. Verfahren nach Anspruch 5, ferner **gekennzeichnet durch:**
Kombinieren der zurückgeführten hydratisierten Teilchen des superabsorbierenden Polymers mit einem Träger und wahlweise mit einem nicht hydratisierten superabsorbierenden Polymer, um ein Behandlungsfluid bereitzustellen; und
Einbringen des Behandlungsfluids in eine unterirdische Formation.

7. Verfahren nach einem der Ansprüche 1 bis 6, wobei das Reinigungsfluid oder das Futterrohrspülfluid ein geschäumtes Fluid ist, das einen Schaumbildner und einen Gasbestandteil umfasst.

8. Verfahren nach Anspruch 7, wobei die Summe der Volumina des Gasbestandteils und des superabsorbierenden Polymers basierend auf dem Gesamtvolumen des geschäumten Fluids größer als 50 % ist.

9. Verfahren nach einem der Ansprüche 1 bis 6, wobei
der Träger Wasser oder Kochsalzlösung umfasst und
das superabsorbierende Polymer Wiederholungseinheiten, die von einer Acrylsäure oder einem Salz davon abgeleitet sind, ein Acrylat, ein Acrylamid, ein Vinylpyrrolidon, ein Vinylacetat, einen Vinylalkohol, eine 2-Acrylamid-2-methylpropansulfonsäure, ein Derivat davon oder eine Kombination davon umfasst.

10. Verfahren nach einem der Ansprüche 1 bis 2, wobei das Futterrohrspülfluid 9,08 bis 45,4 kg (20 bis 100 Pfund) des superabsorbierenden Polymers pro 3785 I (eintausend Gallonen) des Futterrohrspülfluids umfasst.

11. Verfahren nach einem der Ansprüche 1 bis 6, wobei das Reinigungsfluid oder das Futterrohrspülfluid ferner 0,9 bis 11,3 kg (2 bis 25 Pfund) eines Polysaccharids pro 3785 I (eintausend Gallonen) des Reinigungsfluids oder des Futterrohrspülfluids umfasst.

## Revendications

1. Procédé d'élimination d'un agent de soutènement résiduel dans un puits de forage horizontal ou dévié à partir d'une surface inférieure dans une colonne de tubage ou de production après une opération de fracturation, le procédé étant **caractérisé par** :
la circulation d'un fluide de rinçage de tubage comprenant un transporteur et un polymère superabsorbant comprenant une pluralité de réticulations formées avant la combinaison du polymère superabsorbant avec le transporteur dans le tubage ou la production ; et
le transport de l'agent de soutènement résiduel à partir de la surface inférieure du tubage ou de la production vers une fracture créée par une opération de fracturation hydraulique.

2. Procédé selon la revendication 1, **caractérisé en outre par** la mise en place d'un bouchon provisoire après que le tubage a été traité avec le fluide de rinçage de tubage.

3. Procédé de nettoyage d'un puits de forage, le procédé étant **caractérisé par** :
l'introduction d'un fluide de nettoyage à travers un conduit inséré dans le puits de forage pour mettre en suspension et transporter des débris dans le puits de forage vers une surface du puits de forage, dans lequel le fluide de nettoyage comprend un fluide transporteur et un polymère superabsorbant comprenant une pluralité de réticulations formées avant la combinaison du polymère superabsorbant avec le transporteur, dans lequel le fluide de nettoyage comprend 9,08 à 45,4 kg (20 à 100 livres) du polymère superabsorbant par 3785 I (mille gallons) du fluide de nettoyage ; et
la réception d'un fluide de retour comprenant des débris à la surface du puits depuis un espace annulaire entre le conduit et une paroi du puits de forage.

4. Procédé selon la revendication 3, dans lequel le conduit comprend une colonne de forage, une colonne de tubage, une colonne de production, un tubage attaché ou un tubage enroulé.

5. Procédé selon la revendication 3, **caractérisé en outre par** :
l'ajout d'eau au fluide de retour pour fournir une composition plus fluide comprenant une bouillie de particules hydratées du polymère superabsorbant et des débris décantés de la composition plus fluide ;
la séparation des débris de la bouillie ; et
la filtration de la bouillie à travers un filtre à mailles pour fournir des particules hydratées recyclées du polymère superabsorbant, dans lequel le filtre à mailles présente une dimension de maillage inférieure à une taille moyenne prédéterminée des particules hydratées du polymère superabsorbant.

6. Procédé selon la revendication 5, **caractérisé en outre par**
la combinaison des particules hydratées recyclées du polymère superabsorbant avec un transporteur et éventuellement avec un polymère superabsorbant non hydraté pour fournir un fluide de traitement, et
l'introduction du fluide de traitement dans une formation souterraine.

7. Procédé selon l'une quelconque des revendications 1 à 6, dans lequel le fluide de nettoyage ou le fluide de rinçage de tubage est un fluide moussé comprenant un agent moussant et un constituant gazeux.

8. Procédé selon la revendication 7, dans lequel la somme des volumes du constituant gazeux et du polymère superabsorbant est supérieure à 50 % sur la base du volume total du fluide moussé.

9. Procédé selon l'une quelconque des revendications 1 à 6, dans lequel
le transporteur comprend de l'eau ou de la saumure ; et
le polymère superabsorbant comprend des motifs récurrents dérivés d'un acide acrylique ou d'un sel de celui-ci, un acrylate, un acrylamide, une vinylpyrrolidone, un acétate de vinyle, un alcool vinylique, un acide 2-acrylamide-2-méthylpropanesulfonique, un dérivé de ceux-ci, ou une combinaison de ceux-ci.

10. Procédé selon l'une quelconque des revendications 1 à 2, dans lequel le fluide de rinçage de tubage comprend 9,08 à 45,4 kg (20 à 100 livres) du polymère superabsorbant par 3785 I (mille gallons) du fluide de rinçage de tubage.

11. Procédé selon l'une quelconque des revendications 1 à 6, dans lequel le fluide de nettoyage ou le fluide de rinçage de tubage comprend en outre 0,9 à 11,3 kg (2 à 25 livres) d'un polysaccharide par 3785 I (mille gallons) du fluide de nettoyage ou du fluide de rinçage du tubage.
